# EUROPEAN PATENT APPLICATION

(11) **EP 1 072 978 A1**
(43) Date of publication of application: **31.01.2001**
(21) Application number: 00900359.1
(22) Date of filing: 13.01.2000
(51) Int. Cl.: G06F 11/22, G06F 11/30

(54) **REMOTE MAINTENANCE DEVICE AND REMOTE MAINTENANCE SYSTEM**

(30) Priority: 13.01.1999 JP 689299
(71) Applicant: Soltec Japan, Ltd, Naka-gun, Kanagawa 255-0001 (JP)
(72) Inventor: NAKAYAMA, Tasuku, Naka-gun, Kanagawa 259-0123 (JP)
(74) Representative: Gill, David Alan
(86) International application number: JP0000119
(87) International publication number: WO0042508

(57) **Abstract**

For a computer to be kept in good condition which is not in normal operation condition, the present invention provides a remote maintenance device that allows the recovery of normal operation to the computer to be kept in good condition by remotely performing the procedures of rebooting the computer, reinstalling a software, and so on without dispatching a maintenance engineer to the site.

The remote maintenance device is located between a main body of a computer to be kept in good condition and both input and display means to be directly connected to the main body of the computer and respectively connected a serial communication means and an external communication line of the main body of the computer, so that the computer is maintained by remotely operating the input means in addition to remotely monitoring a screen of the display means through the external communication line.

## Description

### FIELD OF THE INVENTION

The present invention relates to a remote maintenance device for restoring a computer to proper working condition by remotely performing maintenance on the computer without a visit of a maintenance engineer to the site in the event of any operational failure on the computer to be kept in good condition.

### BACKGROUND OF THE INVENTION

Recent years have seen the widespread use of various kinds of computers, especially personal computers in the home consumer market not only in various kinds of business offices as the computer has dropped in price. Even though the typical operation of computer is simplified as the computer penetration increases, the computer is still comprised of a complex hardware structure and a complex software configuration. Thus, it is hard to handle the computer in contrast to electric appliances for use at home.

Under such circumstances, ordinary users with a little expert knowledge of computers buy computers at electrical stores and each of them may be able to set up the computer and operate it for oneself. In such a computer, however, some programs cannot run if the user performs the setting of various parameters and the input of data improperly. Thus such an improper operation becomes a leading cause of trouble in the use of computer.

The trouble caused by operating the computer improperly as mentioned above becomes a factor that prevents the widespread use of computers more than ever before. In addition, even though the users consider the purchase of the computers, there are many cases in which the computers have not been used because some of the users cannot use the computers properly.

For this reason, each of the computer companies is putting efforts to improve the system of supporting the users by telephone, facsimile, and the like. In most cases, however, the user explains the details of trouble by word of mouth or in text form ambiguously.

In view of the above fact, several attempts have been performed to make a remote maintenance of computer to be kept in good condition. In Japanese Patent Application Laying-open No. 10-11318 (1998), a typical example of the conventional remote maintenance devices for computers is disclosed.

In the remote maintenance device disclosed in such a publication, however, it only reboot the computer to be kept in good condition by remote control in which the electric supply is switched on/off or the reset signal is switched on/off.

Therefore, the conventional remote maintenance device is on the precondition that initial settings of various parameters for the set-up of computer to be kept in good condition and the installation of additional software-program are performed properly. Thus, it is only effective on the trouble to be resolved by the switching on/off of the electric supply or the switching on/off of the reset signal. For this reason, the remote maintenance cannot be performed under the circumstances where another kind of trouble is caused. In this case, a maintenance engineer is forced to go to the spot for investigating the cause of trouble. The maintenance engineer operates a console (including a monitor and a keyboard) to change the set values, restart the computer, re-install software, or the like.

### Disclosure of the Invention

The present invention is implemented to solve the above problems of the conventional remote maintenance device, so that an object of the present invention is to provide a remote maintenance device that allows a recovery in operative condition of the computer to be kept in good condition in all cases, such as in a case a malfunction of the communication capability is occurred when the computer to be kept in good condition is not functioning in its normal fashion.

For this reason, the remote maintenance device being located between a main body of a computer to be kept in good condition and both input and display means to be directly connected to the main body of the computer and respectively connected to a serial communication means and an external communication line of the main body of the computer. Such a remote maintenance device is constructed so as to maintain the computer to be kept in good condition by remotely operating the input means in addition to remotely monitoring a screen of the display means through the external communication line.

Furthermore, the remote maintenance device comprises a switching means for switching a normal operation mode and a remote maintenance operation mode of the computer, which is remotely controlled by way of the external communication line.

In a more concrete configuration of the remote maintenance device, it comprises: an input device connecting means for connecting to an input device to be connected to the main body of the computer; a display device connecting means for connecting to a display device to be connected to the main body of the computer; a connecting means for connecting to an input device connector means to be provided on the main body of the computer; a serial communication connector means to be provided on the main body of the computer; and an external communication control means to be connected to the external communication line.

Furthermore, the remote maintenance device comprises: an image signal distribution means for supplying an image signal form a distribution terminal to the display device through the display device connecting means by receiving the image signal to be produced from the main body of the computer through a connection means for connecting to the display device connector means; an A/D converting means for performing an A/D conversion by an input of the image signal from another distribution terminal of the image signal distributor; an image storage means for temporary storing the image data produced from the A/D converting means; an information processing means which is connected to the image storage means and controls internal components of the device; a first switching means for selectively switching connection of the external communication means to the serial communication connector means or the information processing means; and a second switching means for selectively switching connection of the input device connection means to the input device or the information processing means.

In addition, the external communication control means includes a modem for an analog communication line or an adapter device for a digital communication line.

Still furthermore, a remote maintenance system comprises: a remote maintenance device on the maintenance's side, which is located between a main body of a computer to be kept in good condition and both input and display means to be directly connected to the main body of the computer and respectively connected a serial communication means and an external communication line of the main body of the computer; and a remote maintenance device on the operator's side, which is connected to the communication line and maintains the computer to be kept in good condition by remotely operating the input means in addition to remotely monitoring a screen of the display means through the external communication line. Here, the remote maintenance system may comprise: a display means for displaying a screen to be displayed on a display device of the computer to be kept in good condition; a data input means for supplying an operation directive instruction code to the main body of the computer; and both control and storage means for downloading various programs and other data stored in a storage means of the computer.

### Brief Description of the Drawings

Fig. 1 is a diagrammatic illustration of the remote maintenance system in accordance of the present invention.
Fig. 2 is a diagrammatic illustration of an internal configuration of the remote maintenance system.
Fig. 3 is a flow chart for illustrating the processing operation of the remote maintenance system.

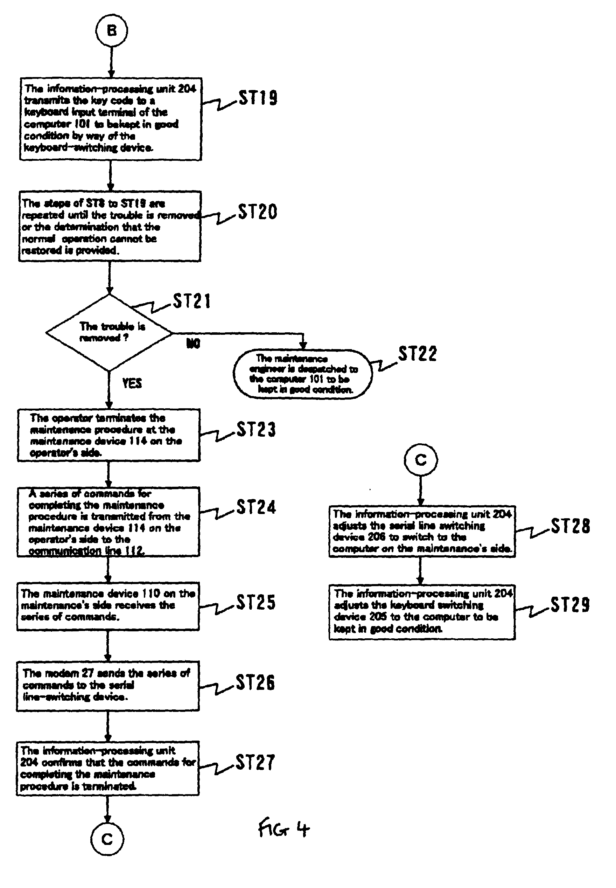

Fig. 4 is a flow chart for illustrating the processing operation of the remote maintenance system.

### Best mode of carrying out the present invention

Hereinafter, a remote maintenance system of the present invention will be described in detail with reference to the drawings.

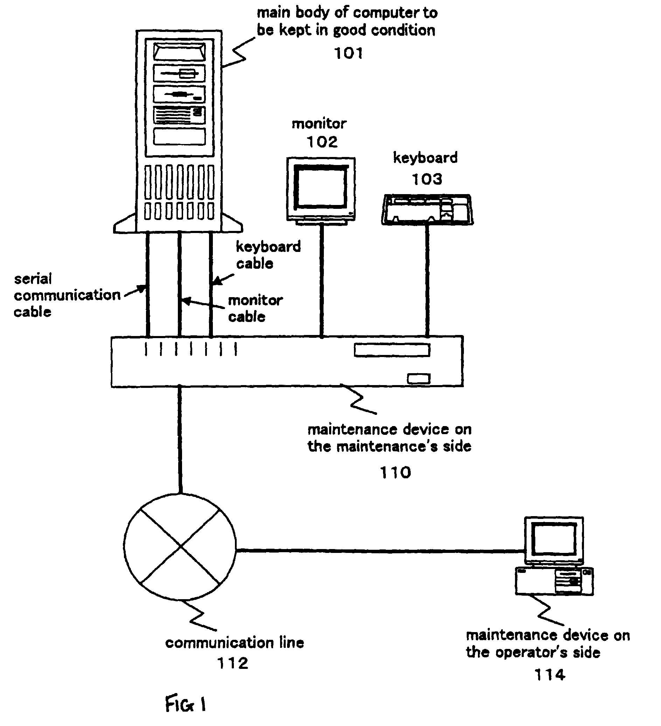

Fig. 1 is a block diagram that illustrates the configuration and application of the remote maintenance device in accordance with the first embodiment of the present invention. In the figure, the reference numeral 101 denotes a computer to be kept in good condition, 110 denotes a maintenance device on the maintenance's side, 112 denotes a communication line such as a public circuit, and 114 denotes a maintenance device on the operator's side.

The maintenance device 114 on the operator's side is connected to a monitor output signal, a keyboard input line, and a serial circuit of the computer 101 to be kept in good condition, while it is connected to the communication line 112 from the maintenance device 114 from the operator's side.

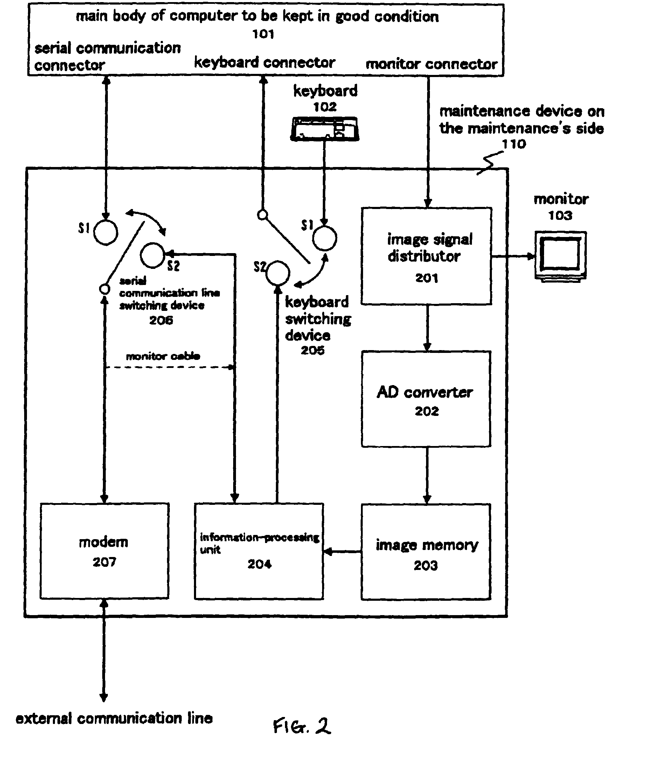

Fig. 2 is a block diagram that illustrates an internal configuration of the maintenance device on the maintenance's side of the remote maintenance device in accordance with the first embodiment of the present invention. In the figure, the reference numeral 201 denotes an image signal distributor, 202 denotes an AD (analog-to-digital) converter; 202 denotes a memory, 204 denotes an data processing unit for monitoring commands, controlling a switching relay, character recognition, or picture compression; 205 denotes a keyboard switching device; 206 denotes a serial line switching device; and 207 denotes a modem which may be not only a modem device for analog communication line but also an adaptor device for digital communication line.

An example of serial communications protocol is RS-232-C standard, so that serial communications connections to be used are in conformity with such an industry standard. The communication line 114 from the maintenance device114 of the operator's side and a serial line from the computer 101 to be kept in good condition are connected to the modem 207 through the serial line-switching device. Alternatively, another data transmission line such as a parallel line may be used for the connection between the computer 101 to be kept in good condition and the modem 207 to meet the specifications of the modem 207 or the like. In addition, a keyboard input line from the computer 101 to be kept in good condition is connected to the keyboard switching device 205 and the monitor input signal is connected to the image signal distributor. A monitor and a keyboard for the computer 101 to be kept in good condition are connected to the image signal distributor 201 and the keyboard-switching device 205, respectively.

The above serial line is connected to the serial line switching device 206, the serial line switching device 206 is connected to The information-processing unit 204 , The information-processing unit 204 is connected to the AD converter 202, and the AD converter 202 is connected to the image signal distributor 201.

An input signal from the image-processing unit 204 to the image signal distributor 202 is in control of the serial line-switching device 206 to isolate the modem 207 from the computer 101 to be kept in good condition and sift the control to The information-processing unit 204 . Furthermore, The information-processing unit 204 is in control of the keyboard switching device 205 to isolate an external keyboard, so that a keyboard input line to the computer 101 to be kept in good condition receives keyboard data from the maintenance device 114 on the operator's side.

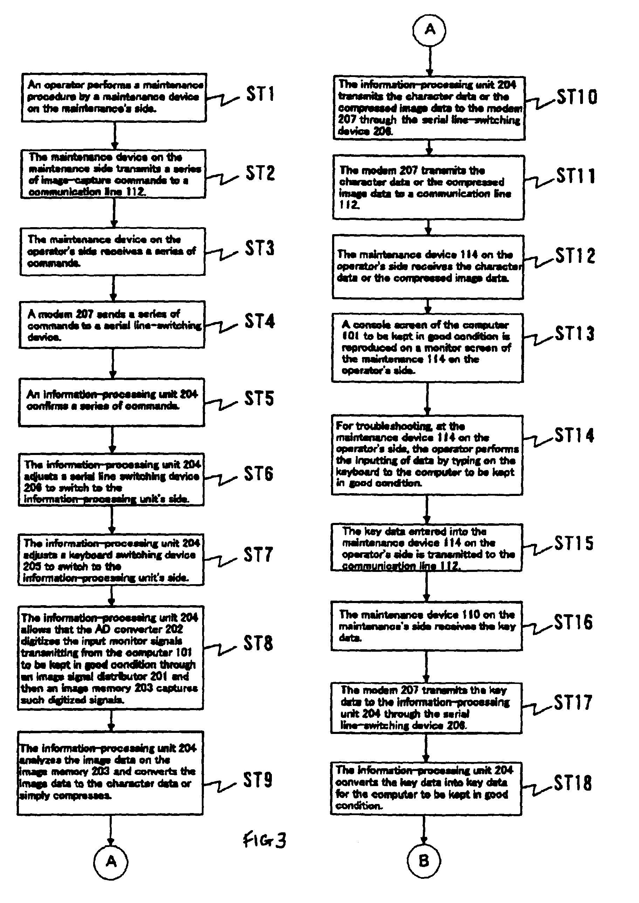

Fig. 3 is a flow chart that illustrates the procedure of operating the remote maintenance device of the first embodiment. If the computer 101 to be kept in good condition is not functioning in its normal fashion, for example a breakdown of data transmission or no response from the computer to be kept in good condition, the maintenance procedure is performed by the maintenance device 114 on the operator's side (step ST1). Then, a sequence of image-capture commands consisting of the specific character string is transmitted to the communication line 112 (step ST2).

The maintenance device 110 on the maintenance's side receives the sequence of commands (step ST3). Then, the modem 207 sends the sequence of commands to the serial line-switching device (step ST4).

The information-processing unit 204 confirms the sequence of commands (step ST5).

The information-processing unit 204 adjusts the keyboard-switching device 205 to switch to The information-processing unit 204 (step ST7).

The information-processing unit 204 allows that the AD converter 202 digitizes the input monitor signals transmitting from the computer 101 to be kept in good condition through the image signal distributor 201 and then the image memory 203 captures such digitized signals (step ST3). The information-processing unit 203 analyzes the image data on the image memory 203 and converts the image data to the character data or simply compresses it (step ST9).

The information-processing unit 204 transmits the character data or the compressed image data to the modem 207 through the serial line-switching device 206 (step ST10). Then, the modem 207 transmits the character data to the communication line 112 (step ST11).

The maintenance device 114 on the operator's side receives the character data or the compressed image data (step ST12). A console screen of the computer 101 to be kept in good condition is reproduced on a monitor screen of the maintenance device 114 on the operator's side (step ST13).

For troubleshooting, at the maintenance device 114 on the operator's side, the operator performs the inputting of data by typing on the keyboard to the computer to be kept in good condition (step ST14).

The key data entered into the maintenance device 114 on the operator's side is transmitted to the communication line 112 (step ST15).

The maintenance device 110 on the maintenance's side receives the key data (step ST16). Then, the modem 207 transmits the key data to The information-processing unit 204 through the serial line-switching device 206 (step ST17).

The information-processing unit 204 converts the key data into key data for the computer to be kept in good condition (step ST18).

The information-processing unit 204 transmits the key code to a keyboard-input terminal of the computer 101 to be kept in good condition by way of the keyboard-switching device (step ST19).

The steps of ST8 to St19 are repeated until the trouble is removed or the determination that the normal operation cannot be restored is provided (step ST20). The operator judges whether the trouble is removed (step ST21). If the trouble is not removed, then a maintenance engineer is dispatched to the computer 101 to be kept in good condition (step ST22).

If the trouble is removed, then the operator terminates the maintenance procedure at the maintenance device 114 on the operator's side (step ST23).

A series of commands for completing the maintenance procedure is transmitted from the maintenance device 114 on the operator's side to the communication line 112 (step ST24).

The maintenance device 110 on the maintenance's side receives the series of commands (step ST25). Then, the modem 27 sends the series of commands to the serial line-switching device (step ST26).

Following that The information-processing unit 204 confirms that the commands for completing the maintenance procedure is terminated (step ST27), The information-processing unit 204 adjusts the serial line switching device 206 to switch to the computer on the maintenance's side (step ST28) and similarly adjusts the keyboard switching device 205 to the computer to be kept in good condition (step ST29), resulting in the recovery to normal condition.

As described above, the remote maintenance device of the present invention comprises a main unit of the computer to be kept in good condition; a maintenance device on the maintenance's side being located between the main unit of the computer and both input and display means to be directly connected to the main unit of the computer and connected to the communication line and the serial communication means to be connected to the main unit of the computer; and the maintenance device on the operator's side being connected to the communication line, which maintains the computer to be kept in good condition by remotely operating the input means in addition to remotely monitoring a screen of the display means through the external communication line. The present invention is able to provide a remote maintenance device that allows the recovery of normal operation to the computer to be kept in good condition without dispatching a maintenance engineer to the site for investigating the cause of trouble, operating a console (monitor, keyboard, or the like) of the computer, changing the predetermined values, rebooting the computer, reinstalling a software, and so on under circumstances where any trouble is occurred, for example, the initial settings of various parameters and the like at the time of setting up the computer to be kept in good condition or installing an additional software are not appropriately performed.

### Usefulness in Industry

As described above, therefore the present invention is recommended for a remote maintenance device that maintains the computer to restore normal operation to the computer by remote operation without dispatching a maintenance engineer when any trouble is occurred on the computer to be kept in good condition under operating conditions.

## Claims

1. A remote maintenance device being located between a main body of a computer to be kept in good condition and both input and display means to be directly connected to the main body of the computer and respectively connected a serial communication means and an external communication line of the main body of the computer, characterized by maintaining the computer to be kept in good condition by remotely operating the input means in addition to remotely monitoring a screen of the display means through the external communication line.

2. The remote maintenance device as claimed in Claim 1, comprising a switching means for switching a normal operation mode and a remote maintenance operation mode of the computer.

3. The remote maintenance device as claimed in Claim 2, wherein the switching means is remotely controlled by way of the external communication line.

4. The remote maintenance device as claimed in Claim 2, comprising:
an input device connecting means for connecting to an input device to be connected to the main body of the computer;
a display device connecting means for connecting to a display device to be connected to the main body of the computer;
a connecting means for connecting to an input device connector means to be provided on the main body of the computer;
a serial communication connector means to be provided on the main body of the computer; and
an external communication control means to be connected to the external communication line.

5. The remote maintenance device as claimed in Claim 4, comprising:
an image signal distribution means for supplying an image signal from a distribution terminal to the display device through the display device connecting means by receiving the image signal to be produced from the main body of the computer through a connection means for connecting to the display device connector means ;
an A/D converting means for performing an A/D conversion by an input of the image signal from another distribution terminal of the image signal distributor;
an image storage means for temporary storing the image data produced from the A/D converting means;
an information processing means that is connected to the image storage means and controls internal components of the device;
a first switching means for selectively switching connection of the external communication means to the serial communication connector means or the information processing means; and
a second switching means for selectively switching connection of the input device connection means to the input device or the information processing means.

6. The remote maintenance device as claimed in Claim 5, wherein the external communication control means includes a modem for an analog communication line or an adapter device for a digital communication line.

7. A remote maintenance system characterized by comprising:
a remote maintenance device on the maintenance's side, which is located between a main body of a computer to be kept in good condition and both input and display means to be directly connected to the main body of the computer and respectively connected a serial communication means and an external communication line of the main body of the computer; and
a remote maintenance device on the operator's side, which is connected to the communication line and maintains the computer to be kept in good condition by remotely operating the input means in addition to remotely monitoring a screen of the display means through the external communication line.

8. The remote maintenance system as claimed in Claim 7, comprising:
a display means for displaying a screen to be displayed on a display device of the computer to be kept in good condition;
a data input means for supplying an operation directive instruction code to the main body of the computer; and
both control and storage means for downloading various programs and other data stored in a storage means of the computer.

9. The remote maintenance system as claimed in Claim 8, wherein
the maintenance device on the maintenance's side having a switching means for switching between a normal operation mode and a remote maintenance operation mode of the computer to be kept in good condition; and
the maintenance device on the operator's side for remotely controlling the switching means through the external communication line.

10. The remote maintenance device as claimed in Claim 9, wherein the external communication control means includes a modem for an analog communication line or an adapter device for a digital communication line.
